# Europäisches Patentamt
# European Patent Office
# Office européen des brevets

(19)

(11) Veröffentlichungsnummer: **0 009 565**
**B1**

(12) **EUROPÄISCHE PATENTSCHRIFT**

(45) Veröffentlichungstag der Patentschrift: **15.12.82**

(21) Anmeldenummer: **79102792.3**

(22) Anmeldetag: **03.08.79**

(51) Int. Cl.³: **C 01 B 25/14**

(54) Verfahren zur Herstellung von Phosphorpentasulfid bestimmter Reaktivität.

(30) Priorität: **21.08.78 DE 2836502**

(43) Veröffentlichungstag der Anmeldung:
**16.04.80 Patentblatt 80/8**

(45) Bekanntmachung des Hinweises auf die Patenterteilung:
**15.12.82 Patentblatt 82/50**

(84) Benannte Vertragsstaaten:
**BE CH DE FR GB IT**

(56) Entgegenhaltungen:
**DE - A - 2 659 295**
**DE - B - 1 171 883**
**DE - B - 1 222 480**
**FR - A - 1 293 326**
**US - A - 3 023 086**
**US - A - 3 146 069**
**US - A - 3 282 653**

**ABC—CHEMIE, Band 2 L—Z, 1966, VERLAG**
**DEUTSCH, Frankfurt/Main, Zürich**
***** Seite 888 *****

(73) Patentinhaber: **HOECHST AKTIENGESELLSCHAFT**
**Postfach 80 03 20**
**D-6230 Frankfurt/Main 80 (DE)**

(72) Erfinder: **Niermann, Hermann, Dr.**
**Am Wachberg 34**
**D-5042 Erftstadt (DE)**
Erfinder: **Reichert, Günter**
**Weierstrasse 26**
**D-5303 Bornheim-Merten (DE)**
Erfinder: **Ebert, Hans, Dr.**
**Von Bodelschwingh Weg 53**
**D-5042 Erftstadt (DE)**
Erfinder: **Neumann, Friedrich**
**Oststrasse 2c**
**D-4755 Holzwickede (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung von Phosphorpentasulfid bestimmter Reaktivität

Die vorliegende Erfindung betrifft ein Verfahren zur Herstellung von Phosphorpentasulfid ($P_2S_5$) mit vorher bestimmbarer Reaktivität.

Vom $P_2S_5$ sind zwei Modifikationen bekannt: eine kristalline und eine glasig-amorphe. Kristallines $P_2S_5$ erhält man durch langsames Erstarren der $P_2S_5$-Schmelze in größeren Gefäßen, während man die glasig-amorphe Form durch schnelles Verfestigen dünner Schichten auf kalten Oberflächen erzeugt. Von Bedeutung sind diese Modifikationen für die Umsetzung von $P_2S_5$ mit Alkoholen, Phenolen, u.a. Dabei reagiert die amorphe Form schnell und die kristalline langsam, entsprechend ihrem thermodynamischen Energieinhalt.

Im großtechnischen Maßstabe ablaufende Prozesse erfordern häufig $P_2S_5$-Sorten, die in ihrem Reaktionsverhalten ("Reaktivität") zwischen dem der glasig-amorphen und dem der kristallinen Form liegen. Zur Herstellung dieser Sorten sind eine Reihe von Verfahren bekannt geworden. Man kann z.B. nach US—PS 3,146,069 und US—PS 3,282,653 die glasig-amorphe Form längere Zeit auf Temperaturen zwischen 150°C und 250°C erhitzen und dadurch die Reaktivität der glasig-amorphen Form herabsetzen. Man kann andererseits nach US—PS 3,023,086 aber auch den Verfestigungsvorgang einer $P_2S_5$-Schmelze durch Variation der Kühlbedingungen zeitlich verändern und damit Produkte erhalten, deren Reaktivität zwischen der hochreaktiven amorphen und der niedrigreaktiven kristallinen Form liegt.

Das Reaktionsverhalten der so hergestellten Produkte ist das eines einheitlichen Stoffes, d.h. die Temperatur-Zeitkurven der Umsetzung von so hergestelltem $P_2S_5$, z.B. mit Alkoholen, verlaufen stetig und geradlinig. Für Mischungen von hochreaktivem und niedrigreaktivem $P_2S_5$ ist dies jedoch nicht zu erwarten, sondern anzunehmen, daß zunächst die hochreaktive Form reagiert und erst anschließend die niedrigreaktive.

Überraschenderweise wurde nun gefunden, daß man aus einem vorliegenden $P_2S_5$ hoher Reaktivität und einem ebenfalls vorliegenden $P_2S_5$ geringer Reaktivität ein Phosphorpentasulfid mit vorher bestimmbarer Reaktivität, die insgesamt zwischen den Reaktivitäten der Ausgangsprodukte liegt, herstellen kann, wenn man diese beiden Ausgangsprodukte in Mengenverhältnissen miteinander vermischt, die von den jeweiligen Reaktivitäten der Ausgangsprodukte abhängen. Dabei werden bei höheren Anteilen an dem hochreaktiven $P_2S_5$ in der Mischung höhere Reaktivitäten im späteren Endprodukt erhalten als mit geringeren Anteilen an hochreaktivem $P_2S_5$ und umgekehrt. Anschließend wird die entstandene Mischung gemahlen.

Die Vorteile des neuen Verfahrens liegen in der vorher genauen Einstellbarkeit der gewünschten Reaktivität des Endproduktes und in dem hierzu erforderlich geringen apparativen Aufwand.

Mann kann z.B. aus zwei Vorratsbunkern, wobei in einem hochreaktive Schuppen und im anderen niedrigreaktives Brechgut gelagert werden, die Komponenten mit zwei Zuteilschnecken einer Mühle zuführen. Durch Regelung der Geschwindigkeit der Schnecken kann die Menge jeder Komponente und damit die gewünschte Reaktivität eingestellt werden.

Beispiel 1
($P_2S_5$ hoher Reaktivität)
Von einer wassergekühlten Kühlwalze wurde hochreaktives $P_2S_5$ abgeschuppt, in einem Bunker gesammelt und mit eine Zellenschleuse einer Mühle zugeführt. Das feingemahlene $P_2S_5$ besaß dann eine Reaktivität von 35,4°C/h, gemessen gegen Äthylhexanol.

Beispiel 2
($P_2S_5$ geringer Reaktivität)
Flüssiges $P_2S_5$ wurde in ein 60 l-Faß abgelassen und erstarrte darin ohne jede Kühlmaßnahme. Es wurde nach dem Erkalten gebrochen und in einem Bunker gelagert. Mit Hilfe einer Zellenschleuse wurde es einer Mühle zugeführt. Nach dem Mahlen besaß das $P_2S_5$-Pulver eine Reaktivität von 10,3°C/h.

Beispiel 3
Aus den Bunkern mit hochreaktiven $P_2S_5$-Schuppen gemäß Beispiel 1 und mit niedrigreaktiven $P_2S_5$-Brocken gemäß Beispiel 2 wurde einer Mühle gleichzeitig Material zur Mahlung zugeführt. Die Zellenschleusen für die Zugabe zur Mühle wurden auf ein Mischungsverhältnis von ca. 1:1 reguliert. Das gemahlene $P_2S_5$-Pulver besaß eine einheitliche Reaktivität von 26,5°C/h.

Beispiel 4
Die Geschwindigkeit der Zellenschleuse für die Zufuhr von hochreaktiven $P_2S_5$-Schuppen und niedrigreaktiven $P_2S_5$-Broken zur Mühle wurde so eingestellt, daß das Mischungsverhältnis Schuppen : Brocken in etwa 1:2 betrug. Das feingemahlene $P_2S_5$-Pulver hatte eine Reaktivität von 21,4°C/h.

Beispiel 5
Die Geschwindigkeit der Zellenschleusen für die Zufuhr von hochreaktiven $P_2S_5$-Schuppen und niedrigreaktiven $P_2S_5$-Broken zur Mühle wurde so eingestellt, daß das Mischungsverhältnis Schuppen : Brocken ca. 2:1 betrug. Das feingemahlene $P_2S_5$-Pulver besaß eine Reaktivität von 31,4°C/h.

In dem nachfolgenden Diagramm sind die Temperatur-Zeit-Kurven der Umsetzungen vom

P$_2$S$_5$ mit Äthylhexanol gemäß der Beispiele 1 bis 5 aufgetragen, wobei die Kurve I dem Beispiel 1, die Kurve II dem Beispiel 2 usw. entspricht.

Wie die Kurven 3 bis 5 zeigen, verliefen auch die Umsetzungen der erfindungsgemäßen Mischungen stetig und geradlinig. Ferner geht daraus eindeutig hervor, daß deren Reaktivitäten sich in direkter Weise mit dem Mischungsverhältnis der Ausgangskomponenten ändern.

Die bei der Umsetzung des P$_2$S$_5$ freiwerdende Reaktionswärme, gemessen in °C/h, stellt ein Maß für die Reaktivität des P$_2$S$_5$ gegenüber Äthylhexanol dar.

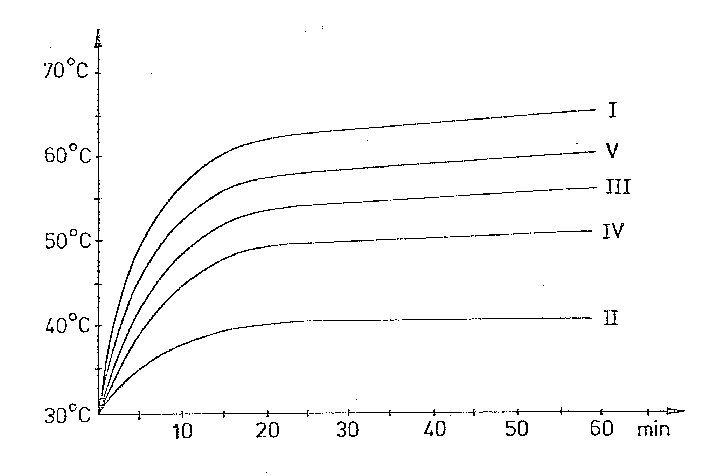

## Patentanspruch

Verfahren zur Herstellung von Phosphorpentasulfid (P$_2$S$_5$) bestimmter Reaktivität, dadurch gekennzeichnet, daß man zur Herstellung eines P$_2$S$_5$, dessen Reaktivität zwischen der eines vorliegenden hochreaktiven und der eines ebenfalls vorliegenden gering reaktiven P$_2$S$_5$ liegt, diese beiden Ausgangsprodukte in Mengenverhältnissen miteinander vermischt, die von den jeweiligen Reaktivitäten der Ausgangsprodukte in der Weise abhängen, daß bei höheren Anteilen an dem hochreaktiven P$_2$S$_5$ in der Mischung höhere Reaktivitäten im späteren Endprodukt erhalten werden als mit geringeren Anteilen an hochreaktivem P$_2$S$_5$, und daß man die entstandene Mischung anschließend mahlt.

## Claim

Process for making phosphorus pentasulfide (P$_2$S$_5$) of predetermined reactivity, characterized in that, in order to produce P$_2$S$_5$ whose reactivity lies between that of a P$_2$S$_5$ of high reactivity and that of a P$_2$S$_5$ of low reactivity, these two starting materials are mixed in quantitative proportions which are selected in accordance with the respective reactivity of the starting materials in such a manner that a mixture containing more P$_2$S$_5$ of high reactivity mixture produces a final product of higher reactivity than the mixture containing less P$_2$S$_5$ of high reactivity, and in that the mixture so obtained is successively ground.

## Revendication

Procédé de préparation de pentasulfure de phosphore (P$_2$S$_5$) de réactivité déterminée, caractérisé en ce que pour la fabrication d'un P$_2$S$_5$ d'une réactivité comprise entre celle d'un P$_2$S$_5$ très réactif et celle d'un P$_2$S$_5$ peu réactif, on mélange ces deux produits de départ dans des proportions relatives qui sont fonction de la réactivité respective des produits de départ de telle manière qu'avec des proportions plus élevées de P$_2$S$_5$ très réactif on obtient une réactivité du produit final plus élevée qu'avec des proportions plus faibles de P$_2$S$_5$ très réactif, et en ce que l'on broie ensuite le mélange obtenu.